# EUROPEAN PATENT APPLICATION

(11) **EP 4 703 020 A1**
(43) Date of publication of application: **04.03.2026**
(21) Application number: 24795679.0
(22) Date of filing: 15.03.2024
(51) Int. Cl.: B01D 3/14

(54) **ATOMIZATION APPARATUS, ATOMIZATION METHOD, AND AIR SEPARATION DEVICE**

(30) Priority: 24.04.2023 CN 202310452025
(71) Applicant: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventor: SUN, Lianming, Hangzhou, Zhejiang Hangzhou, Zhejiang 310012 (CN); LENG, Wei, Hangzhou, Zhejiang Hangzhou, Zhejiang 310012 (CN); QUEIROZ, Joao, Hangzhou, Zhejiang Hangzhou, Zhejiang 310012 (CN); TOVAR RAMOS, Jorge Ernesto, Hangzhou, Zhejiang Hangzhou, Zhejiang 310012 (CN)
(74) Representative: Air Liquide
(86) International application number: PCT/CN2024/081804
(87) International publication number: WO 2024/222296

(57) **Abstract**

An atomization apparatus (1), an atomization method, and an air separation unit (10). In the atomization apparatus (1), a target liquid (f0) flows in a liquid conveying pipeline (2). A premixed gas (g1) flows in a premixing pipeline (3). The target liquid (f0) flows into the premixing pipeline (3) at a premixing position (p4) by means of the liquid conveying pipeline (2), so that the target liquid (f0) is mixed with the premixing gas (g1) to form a premixed stream (s1) containing the target liquid (f0) and the premixing gas (g1). The liquid conveying pipeline (2) and the premixing pipeline (3) are arranged such that in the premixing position (p4), a predetermined angle (α) is formed between the flow direction (Df) of the target liquid (f0) and the flow direction (D1) of the premixing gas (g1). An entrainer gas (g0) flows in an atomization pipeline (4), and the premixed stream (s1) is injected into the atomization pipeline (4) by means of the premixing pipeline (3), so that the target liquid (f0) is atomized in the entrainer gas (g0). According to the atomization apparatus (1) and method, the target liquid (f0) can be atomized in the entrainer gas (g0). The air separation unit (10) can recover the cooling capacity in a discharged liquid purge.

## Description

### Technical Field

This disclosure relates to the gas industry field, involving an air separation unit, and particularly, an atomization apparatus and an atomization method.

### Background Art

In many air separation units, a certain amount of liquid needs to be discharged from a condenser-vaporiser, for example, a bath-type vaporiser, to prevent the accumulation of hydrocarbons and other impurities such as N₂O. This liquid purge cannot be vaporised in the main heat exchanger because the impurities may form solid deposits, thus causing channel blockage, which poses an explosion risk. Therefore, currently, the liquid purge is usually discharged directly. This wastes the work done to cool and liquefy the gas into the liquid purge, that is, it wastes the cold of the liquid purge.

However, in some air separation units, the amount of low-temperature liquid purge is not negligible. The cold lost through this liquid purge is detrimental to the energy efficiency of the unit. Therefore, how to recover the cold contained in the liquid purge is a problem that needs to be solved.

The inventor analyzes that the low-temperature liquid purge can be injected into an entrainer gas, causing the liquid purge to vaporise in the entrainer gas. Then, the entrainer gas containing the vaporised components of the liquid purge passes through the main heat exchanger to be heated, which can recover the cold of the liquid purge. To facilitate the evaporation of the liquid purge in the entrainer gas, the liquid purge can pre-atomize in the entrainer gas to ensure sufficient mixing of the liquid purge with the entrainer gas.

Therefore, it is necessary to design an atomization apparatus that can atomize the liquid purge in an entrainer gas.

### Brief Summary of the Invention

An object of this disclosure is to provide an atomization apparatus and method that can fully atomize a target liquid, such as the above liquid purge, in an entrainer gas.

Another object of this disclosure is to provide an air separation unit that can recover the cold of the liquid purge.

This disclosure provides an atomization apparatus for atomizing a target liquid in an entrainer gas. The atomization apparatus comprises a liquid conveying pipeline, a premixing pipeline and an atomization pipeline. The target liquid flows in the liquid conveying pipeline. A premixing gas flows in a premixing pipeline. The target liquid goes into the premixing pipeline at a premixing position via the liquid conveying pipeline, so that the target liquid mixes with the premixing gas, forming a premixed stream containing the target liquid and the premixing gas. Wherein the liquid conveying pipeline and the premixing pipeline are arranged such that, at the premixing position, the flow direction of the target liquid is at a predetermined angle to the flow direction of the premixing gas. The entrainer gas flows in the atomization pipeline. The premixed stream is injected into the atomization pipeline via the premixing pipeline, so that the target liquid atomizes in the entrainer gas, forming a mixed stream.

In one embodiment, the atomization apparatus is arranged such that the premixing gas and the entrainer gas are the same type of gas.

In one embodiment, the premixing pipeline and the atomization pipeline are formed by branching from an upstream pipeline at a branch point.

In one embodiment, the atomization pipeline has a narrow pipe section with a reduced diameter. The narrow pipe section has a start position and an end position in the flow direction of the entrainer gas. The injection position where the premixed stream enters the atomization pipeline is upstream of the end position. Further, the injection position is between the start position and the end position. Further, the atomization pipeline comprises two main pipe sections connected to both sides of the narrow pipe section. The narrow pipe section comprises a straight section and two transition sections. The diameter of the straight section is a constant value smaller than the diameters of the two main pipe sections. The diameters of the two transition sections gradually change from the side of the corresponding main pipe section towards the side of the straight section, respectively. The injection position is located within the straight section.

In one embodiment, the atomization pipeline has a first pipe section and a second pipe section connected at an angle to each other. The premixing pipeline extends through the pipe wall of the first pipe section into the second pipe section.

In one embodiment, the premixing pipeline has an injection section extending into the atomization pipeline, the injection section comprising an injection port for the premixed stream to be injected. The injection section is coaxially arranged within a corresponding pipe section of the atomization pipeline, such that at the injection port, the flow direction of the premixed stream is consistent with the flow direction of the entrainer gas.

In one embodiment, the premixed stream is injected into the atomization pipeline at an injection position. The atomization apparatus further comprises a safety unit, which is arranged downstream of the injection position in the atomization pipeline, the safety unit comprising a controller, an acquiring element, and a liquid outlet, wherein the controller controls opening and closing of the liquid outlet by determining a liquid content acquired by the acquiring element.

In one embodiment, the atomization apparatus is arranged such that: the predetermined angle is between 30° and 90°; at the injection position where the premixed stream enters the atomization pipeline, the temperature of the entrainer gas is 5~40°C higher than the temperature of the target liquid; at the injection position, the velocity of the premixed stream is 30~60 m/s, and the velocity of the entrainer gas is 2.5~25 m/s; and/or, at the premixing position, the ratio of the mass flowrate of the premixing gas to the target liquid is 3:1 ~5:1.

This disclosure also provides an atomization method for atomizing a target liquid in an entrainer gas. The atomization method comprises: causing the target liquid to start mixing with a premixing gas at a premixing position to form a premixed stream containing the target liquid and the premixing gas, wherein at the premixing position, the flow direction of the target liquid is at a predetermined angle to the flow direction of the premixing gas; and injecting then the premixed stream into the entrainer gas, so that the target liquid atomizes in the entrainer gas to form a mixed stream.

In one embodiment, the premixing gas and the entrainer gas are made to be the same type of gas.

In one embodiment, it is designed such that: the predetermined angle is 30~90°; at the injection position where the premixed stream enters the atomization pipeline, the temperature of the entrainer gas is 5~40°C higher than the temperature of the target liquid; at the injection position, the velocity of the premixed stream is 30~60 m/s, and the velocity of the entrainer gas is 2.5~25 m/s; and/or, at the premixing position, the ratio of the mass flowrate of the premixing gas to the target liquid is 3:1 ~5:1.

This disclosure also discloses an air separation unit. The air separation unit comprises a distillation column system and a main heat exchanger. The distillation column system having a condenser-vaporiser. The air separation unit comprises the above atomization apparatus. The liquid conveying pipeline of the atomization apparatus is a purge pipeline leading from the condenser-vaporiser. The target liquid of the atomization apparatus is a liquid purge discharged from the condenser-vaporiser via the purge pipeline. The mixed stream of the atomization apparatus flows into the main heat exchanger to be heated.

In one embodiment, the premixing pipeline and the atomization pipeline of the atomization apparatus are formed by branching from an upstream pipeline of an exhaust gas pipe at a branch point, the exhaust gas pipe discharging a gasflow from the distillation column system.

In one embodiment, the liquid purge is an oxygen-rich liquid with an oxygen content at 30% or above, and the gasflow is waste gas or an oxygen product.

In one embodiment, the air separation unit is arranged such that, before reaching the branch point to be split into the entrainer gas and the premixing gas, the gasflow in the exhaust gas pipe enters the main heat exchanger to be preheated.

In one embodiment, the premixed stream of the atomization apparatus is injected into an atomization pipeline at an injection position. The air separation unit further comprises an expansion turbine, which is arranged in a pipe section of the atomization pipeline located between the branch point and the injection position.

In one embodiment, the air separation unit further comprises a sub-cooler. The air separation unit is arranged such that, before reaching the branch point to be split into the entrainer gas and the premixing gas, the gasflow in the exhaust gas pipe enters the sub-cooler to be preheated.

In the above atomization apparatus and method, the target liquid is first premixed with a premixing gas to form a premixed stream. Then, the premixed stream is sent into the entrainer gas. In this case, gas can be mixed into the target liquid during premixing. Subsequently, when the target liquid with gas mixed therein is injected into the entrainer gas, the ratio of gas to liquid changes abruptly, which improves atomization, thus enabling the target liquid to be fully atomized in the entrainer gas.

In the above air separation unit, since the above atomization apparatus is used, the liquid purge as the target liquid can form a mixed stream after atomized in the entrainer gas and enter the main heat exchanger to be heated. Accordingly, the mixed stream, together with the components of the liquid purge therein, can exchange heat in the main heat exchanger, thus supplying cold. Therefore, the above air separation unit can recover the cold of the liquid purge.

### Brief Description of the Figures

The advantages and spirit of this disclosure can be further understood through the following detailed description and the accompanying drawings.
FIG.1 is a schematic view of an exemplary atomization apparatus according to this disclosure.
FIG.2 is a schematic view of another exemplary atomization apparatus according to this disclosure.
FIG.3 is a schematic view of an exemplary air separation unit according to this disclosure.
FIG.4 is a schematic view of another exemplary air separation unit according to this disclosure.
FIG.5 is a schematic view of an exemplary air separation unit according to a variation of this disclosure.

### Detailed Description of the Embodiments

The specific embodiments of this disclosure will be described in details below in conjunction with the accompanying drawings. However, to be understood, this disclosure is not limited to the embodiments described below, and the technical concept of this disclosure can be implemented in combination with other known technologies or functions, or with other technologies that are the same as those known technologies.

The use of qualifiers such as "a" or "an" herein does not refer to a limitation on quantity, but rather describes a technical feature that has not previously occurred. Similarly, unless a noun is modified by a specific quantity quantifier, it should be regarded as including both singular and plural forms herein. This technical solution can include a single such technical feature or a plurality of such technical features. In addition, "at least one (time)", "one (time) or more", etc., refer to one (time) or multiple (times). "Multiple" or "a plurality of" refers to two or more, unless otherwise specified. Further, when modifiers such as "about", "approximately", "essentially" are used to describe, for example, a number, they usually include the number itself, and their specific meaning should be understood in the context.

The terms "first", "second" are used for descriptive purposes only and are not intended to limit the temporal order, quantity, or importance, and should not be understood as indicating or implying relative importance or implicitly indicating the number of the indicated technical features, but merely to distinguish one technical feature from another in this technical solution. Thus, features defined with "first", "second" may explicitly or implicitly include one or more of such features.

The term "and/or" is used to describe the association of related objects and may include any and all combinations of one or more of the related listed items. Taking "A and/or B" as an example, this can mean: only A exists, only B exists, and both A and B exist, where A and B can be singular or plural.

Unless otherwise stated, all terms (including technical and scientific terms) used herein have the same meaning as commonly understood by the skilled in the art to which this disclosure belongs. Also to be understood, terms, such as those defined in commonly used dictionaries, should be interpreted as having a meaning that is consistent with their meaning in the context of the relevant art and the present specification, and should not be interpreted in an idealized or overly formal sense unless expressly so defined herein. For the sake of brevity and/or clarity, well-known functions or constructions may not be described in detail.

In many air separation units (ASU), it is necessary to discharge a certain amount of liquid (referred to as liquid purge herein) from the condenser-vaporiser to avoid the accumulation of impurities, such as hydrocarbons, N₂O, CO₂, etc. In particular, air separation units that need to discharge liquid purge from the condenser-vaporiser include a first type of air separation unit that does not produce an oxygen product, or a second type of air separation unit that produces an oxygen product but all oxygen products are in a gaseous state before heated by the main heat exchanger. The second type of air separation unit is, for example, an air separation unit that only produces a low-pressure oxygen gas product (LPGOX), where LPGOX is, for example, oxygen gas with a pressure below 6 bar.

A "condenser-vaporiser" is substantially a heat exchanger. Wherein, a first stream to be condensed exchanges heat indirectly with a second stream to be vaporised. Each condenser-vaporiser has a condensation space and an evaporation space, respectively formed by condensation channels and evaporation channels. The first stream is condensed, or liquefied in the condensation space, and the second stream vaporises, or evaporates, in the evaporation space. The evaporation space and the condensation space are formed by groups of channels that are in heat exchange relationship with each other. The condenser-vaporiser can be constructed as a bath-type vaporiser, a falling-film-type vaporiser, etc. The condenser-vaporiser can also be called as a condenser-reboiler. "Liquid purge" refers to the liquid discharged from the evaporation space of the condenser-vaporiser to prevent the accumulation of hydrocarbons, that is, the certain amount of liquid discharged from the condenser-vaporiser mentioned earlier.

The "main heat exchanger" is used to cool the feed air in indirect heat exchange with the return streams from the distillation column system of the air separation unit, for example, warm compressed air and one or more cold streams, or, low-temperature liquid air products and one or more warm streams. The main heat exchanger can be formed by a single heat exchanger section or multiple heat exchanger sections connected in parallel and/or in series. Each heat exchanger section is, for example, composed of one or more plate-fin heat exchanger blocks. The plate-fin heat exchanger blocks can have channels that are separated from each other and have heat exchange surfaces, and different streams flow through different channels to be cooled or heated, respectively. Commonly, the main heat exchanger can be a plate-fin brazed aluminum heat exchanger (BAHX). "Fully cooled" means that the stream to be cooled enters the main heat exchanger at the hot end and is then cooled to the cold end temperature of the main heat exchanger, that is, the cooled stream comes out from the cold end of the main heat exchanger. "Partially cooled" means that the stream to be cooled is cooled to an intermediate temperature between the hot end temperature and the cold end temperature of the main heat exchanger, that is, the cooled stream comes out from an intermediate position between the hot end and the cold end of the main heat exchanger. Similarly, "fully heated" means that the heated stream comes out from the hot end of the main heat exchanger, heated to the hot end temperature. "Partially heated" means that the heated stream comes out from an intermediate position of the main heat exchanger, heated to an intermediate temperature.

As mentioned earlier, the inventor believes that due to safety hazards, the liquid purge cannot be vaporised in the main heat exchanger. Therefore, it is not possible to directly let the low-temperature liquid purge enter the main heat exchanger for heat exchange so as to recover the cold. It's analysed that the liquid purge can be injected into an atomization entrainer gas, so that the liquid purge is atomized in the entrainer gas, and thus easily vaporised. Then, the entrainer gas containing the vaporised components of the liquid purge (i.e., converted to a gaseous state) is passed through the main heat exchanger to be heated. This can recover the cold of the liquid purge while avoiding safety hazards. The temperature of the entrainer gas is higher than the temperature of the liquid purge, and at the same time, the entrainer gas is an overheated gasflow. An overheated gasflow means that this gasflow is not in a state of equilibrium, more specifically, it is overheated compared to the equilibrium state. Accordingly, the gasflow has enough heat to vaporise the liquid purge without condensation. The atomization entrainer gas can be, for example, a product gas or a waste gas that will subsequently enter the main heat exchanger to supply cold (i.e., to be heated). In particular, the product gas or waste gas is essentially in a gaseous state before entering the main heat exchanger.

The inventor further analyses that in order to make the liquid purge easy to vaporise in the atomization entrainer gas, the liquid purge can be pre-atomized in the atomization entrainer gas to fully mix the liquid purge with the atomization entrainer gas, so that the liquid purge is fully vaporised.

Overall, by atomizing the liquid purge so that it fully vaporises in the pipeline conveying the atomization entrainer gas, and thus enter the main heat exchanger for heat exchange along with the atomization entrainer gas, the cold recovery of the liquid purge can be achieved.

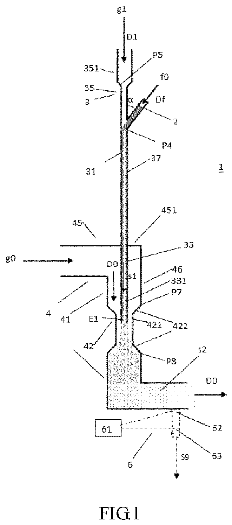

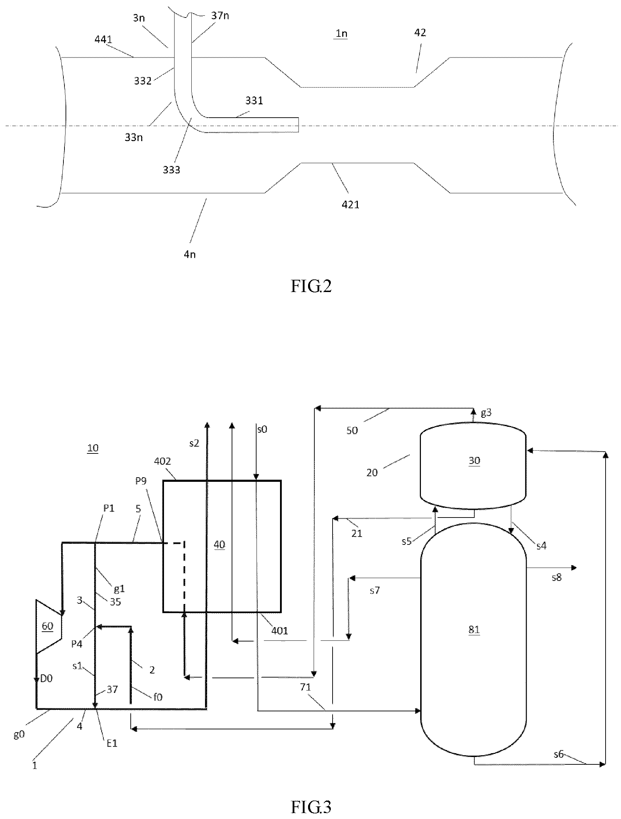

Therefore, this disclosure provides an exemplary construction of the atomization apparatus described below in conjunction with FIG. 1 or FIG. 2, and also describes an exemplary arrangement for fully atomizing and thus fully vaporising the liquid purge in an overheated gasflow in conjunction with FIG. 3, FIG. 4, or FIG. 5.

### Atomization apparatus and Method

FIG. 1 shows an atomization apparatus 1 according to an embodiment of this disclosure. The atomization apparatus 1 is used to atomize a target liquid f0 in an entrainer gas g0. To be understood, the accompanying drawings herein are only for illustrative purposes and are not necessarily drawn to scale, and should not be used to limit the protection scope actually required by this disclosure.

The "atomization" of a liquid means that the liquid is dispersed into tiny droplets. The tiny droplets can also be called as spray droplets. "Atomizing the target liquid f0 in the entrainer gas g0" means that after the target liquid f0 enters the entrainer gas g0, it is dispersed into spray droplets due to the frictional force between the gas and the liquid, and then suspended in the entrainer gas g0.

The atomization apparatus 1 includes a liquid conveying pipeline 2, a premixing pipeline 3, and an atomization pipeline 4. The target liquid f0 flows in the liquid conveying pipeline 2. A premixing gas g1 flows in the premixing pipeline 3. An entrainer gas g0 flows in the atomization pipeline 4.

To be understood, when it is described that a "liquid", "gas", etc. flows in a certain pipeline or flow path, it is not required that the stream flowing in the pipeline or flow path be entirely that liquid or gas; it can be partially mixed with other fluids or even fluids in other phases. For example, taking "the target liquid f0 flows in the liquid conveying pipeline 2" as an example, the stream flowing in the liquid conveying pipeline 2 can also contain less than 50% gaseous components or even solid particles, preferably less than 20%, more preferably less than 5% or even 1%, and even more preferably, approximately 0. In addition, also to be understood, a certain liquid or gas has actually changed its phase after some processing or means, but is still described by the initial term. For example, still taking the "target liquid f0" as an example, in the mixed stream s2 formed by mixing the target liquid f0 with the entrainer gas g0, etc., mentioned later, the target liquid f0 may be in the form of atomized droplets or in a gaseous state after evaporation, but the text may still use the target liquid f0 to describe the components converted from the target liquid f0. In addition, "upstream" and "downstream" are used herein to describe relative positions. It is expressed with respect to the flow direction of the stream in the corresponding pipeline, which can be understood.

The target liquid f0 flows into the premixing pipeline 3 at a premixing position P4 via the liquid conveying pipeline 2, so that the target liquid f0 is mixed with the premixing gas g1 to form a premixed stream s1 containing the target liquid f0 and the premixing gas g1. The liquid conveying pipeline 2 and the premixing pipeline 3 can be arranged such that, at the premixing position P4, the flow direction Df of the target liquid f0 forms a predetermined angle α with the flow direction D1 of the premixing gas g1. That is, the flow direction Df of the target liquid f0 and the flow direction D1 of the premixing gas g1 are not parallel, but at an angle to each other.

The premixed stream s1 is injected into the atomization pipeline 4 via the premixing pipeline 3, so that the target liquid f0 is atomized in the entrainer gas g0 to form a mixed stream s2.

Studies show that when the liquid to be atomized is first premixed with a gas and then sent into the atomization entrainer gas, the ratio of the gas phase to the liquid phase changes abruptly and drastically, which improves atomization. Therefore, in the above atomization apparatus 1, the target liquid f0 is first combined and premixed with the premixing gas g1 to form a premixed stream s1 before being sent into the entrainer gas g0, and then the premixed stream s1 enters the entrainer gas g0, which improves atomization. Therefore, the above atomization apparatus 1 can make the target liquid f0 more fully and uniformly atomized in the atomization pipeline 4.

In this embodiment, the atomization apparatus 1 can be arranged such that the premixing gas g1 and the entrainer gas g0 are the same type of gas. Accordingly, not only it is beneficial for the atomization of the target liquid f0 in the entrainer gas g0, but also it does not introduce new components. To be understood, the same type of gas here does not require it to be composed of only a single gas component, but can also be composed of multiple gas components in a certain proportion.

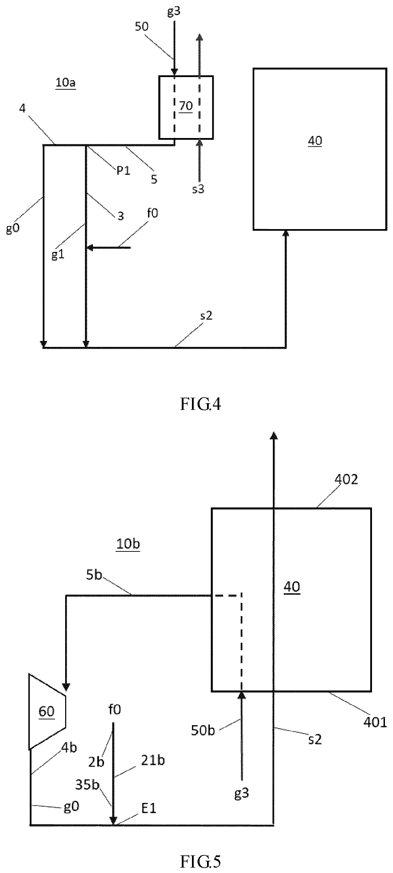

The premixing pipeline 3 and the atomization pipeline 4 can be formed by branching from an upstream pipeline 5 at a branch point P1, which can be seen in FIG. 3 and FIG. 4 to be described in detail later. That is, the stream in the premixing pipeline 3 and the stream in the atomization pipeline 4 are formed by splitting the stream in the upstream pipeline 5, which can ensure that the premixing gas g1 and the entrainer gas g0 are the same type of gas.

As shown in FIG. 1, the liquid conveying pipeline 2 is connected to the pipe wall 31 of the premixing pipeline 3 at the premixing position P4. As mentioned earlier, at the premixing position P4, the flow direction Df of the target liquid f0 forms a predetermined angle α with the flow direction D1 of the premixing gas g1, that is, the liquid conveying pipeline 2 is connected obliquely or perpendicularly to the pipe wall 31 of the premixing pipeline 3 at the premixing position P4. The predetermined angle α can be 30~90°, for example, 45°. In FIG. 1, both the liquid conveying pipeline 2 and the premixing pipeline 3 are shown as straight pipes, and the predetermined angle α is the intersection angle between these two straight pipes.

The above arrangement can facilitate to form an annular flow, also known as a wall-attached flow. Annular flow is a flow pattern of a two-phase flow composed of gas and liquid. In this flow pattern, there is a liquid film along the inner wall of the pipe, and most of the liquid moves along the pipe wall in a film-like manner, while the gas flows at a high speed in the central area of the pipe, entraining mist. Annular flow is a favorable internal flow pattern because it is stable and continuous, leading to a stable and continuous liquid breakup, and droplets of uniform sizes. The premixer formed by the liquid conveying pipeline 2 and the premixing pipeline 3 substantially forms a Y-shaped pipe, constructing a Y-jet pattern. This Y-jet pattern provides stable performance with a narrow atomized droplet sizes spectrum, and highly acceptable mean droplet size. Further, when the predetermined angle α is set at 30~90°, a more stable annular flow can be created, and it is easy to arrange.

As an example, immediately upstream of the premixing position P4, the velocity of the premixing gas g1 in the premixing pipeline 3 (specifically, the premixing front section 35 mentioned later) can be greater than the velocity of the target liquid f0 in the liquid conveying pipeline 2, for example, by 1 m/s, 5 m/s, or 10 m/s. Accordingly, by injecting the target liquid f0 into the premixing gas g1 which is a high speed gasflow, the injected target liquid f0 can adhere to the pipe wall of the premixing pipeline 3, forming this annular flow. To be noted, many parameters could affect the formation of annular flow, for example, the density of the target liquid f0 and the premixing gas g1, the velocity of the target liquid f0 and the premixing gas g1, the ratio of gas-liquid mass flowrate, etc. In the actual process, these parameters can be controlled comprehensively. For example, according to the density of the target liquid f0 and the premixing gas g1, the mass flowrate of the target liquid f0, etc., the mass flowrate of the premixing gas g1 is controlled to adjust the ratio of gas-liquid mass flowrate and even the velocity, etc., to form the expected annular flow.

Continuing to refer to FIG. 1, the atomization pipeline 4 can have a narrow pipe section 42 with a reduced diameter. That is, compared to the upstream main pipe section 41 (i.e., located upstream of the narrow pipe section 42, on the upper side in FIG. 1), the diameter of the narrow pipe section 42 is smaller. In other words, the pipe section with a smaller diameter compared to the upstream main pipe section 41 is the narrow pipe section 42. For example, the minimum diameter (inner diameter) of the narrow pipe section 42 can be reduced by 20% ~50% compared to the diameter of the upstream main pipe section 41.

The narrow pipe section 42 has a start position P7 and an end position P8 in the flow direction D0 of the entrainer gas g0. That is, the diameter of the narrow pipe section 42 is also smaller than that of the downstream main pipe section 41.

The injection position E1 where the premixed stream s1 enters the atomization pipeline 4 is upstream of the end position P8. Further, the injection position E1 can be between the start position P7 and the end position P8. To be understood, the injection position E1 is the injection port of the premixing pipeline 3 for the premixed stream s1 to be injected, rather than the junction part of the premixing pipeline 3 and the pipe wall of the atomization pipeline 4 in FIG. 1.

The narrow pipe section 42 can be referred to as a throat. This throat arrangement can enable the entrainer gas g0 to generate turbulence at the injection position E1. That is, it can improve the turbulence and pressure difference between the inner and outer pipes, thereby increasing the contact between the entrainer gas g0 and the target liquid f0, causing the target liquid f0 to be more dispersed, and thus facilitating the evaporation of the target liquid f0. This is very advantageous in the application in air separation units described later.

As mentioned earlier, the atomization pipeline 4 can include two main pipe sections 41 connected to both sides of the narrow pipe section 42. The narrow pipe section 42 includes a straight section 421 and two transition sections 422. The diameter of the straight section 421 is a constant value smaller than the diameters of the two main pipe sections 41. That is, the straight section 421 of the narrow pipe section 42 is a pipe section with a constant diameter. The diameters of the two transition sections 422 gradually change from the side of the corresponding main pipe section 41 towards the side of the straight section 421. That is, taking the transition section 422 on the downstream side (lower side, in FIG. 1) as an example, the transition section 422 tapers from the downstream main pipe section 41 towards the straight section 421. Further, the injection position E1 can be located within the straight section 421. That is, the injection position E1 is located in the pipe section with the smallest and constant diameter.

The specific structure of the above throat and injection position can achieve a smooth transition, which facilitates to guide the flow of the stream therein and improve the atomization effect.

As shown in FIG. 1, the premixing pipeline 3 can have an injection section 331 extending into the atomization pipeline 4. The injection section 331 includes an injection position E1 for the premixed stream s1 to be injected. The injection section 331 is coaxially arranged within the corresponding pipe section of the atomization pipeline 4, so that at the injection position E1, the flow direction D1 of the premixed stream s1 is consistent with the flow direction D0 of the entrainer gas g0. That is, the flow direction D1 of the premixed stream s1 is the same as the flow direction D0 of the entrainer gas g0. Accordingly, a concentric annular pipe structure is substantially formed. It requires lower pressure and produces a finer spray compared with a pressure atomizer.

Substantially, in FIG. 1, the premixing pipeline 3 can be regarded to include an external connection section 37 connected to the outside of the atomization pipeline 4 and an internal extension section 33 extending into the atomization pipeline 4. To be noted, the liquid purge f0 from the liquid conveying pipeline 2 is injected into the atomization pipeline 4 sequentially through a section of the external connection section 37 of the premixing pipeline 3 downstream of the premixing position P4 and the internal extension section 33 (in the form of being contained in the premixed stream s1).

To be understood, when describing herein that the directions or orientations are consistent or perpendicular, a certain tolerance can be allowed. For example, when describing that the flow directions D1 and D0 are consistent, it is not required that the angle between these two be an absolute zero degree in the mathematical sense, but they can be at an angle of 5° or even 10° to each other.

As shown in FIG. 1, the atomization pipeline 4 has a first pipe section 45 (horizontal pipe section, in FIG. 1) and a second pipe section 46 (vertical pipe section, in FIG. 1) connected at an angle to each other. That is, the first pipe section 45 and the second pipe section 46 are connected obliquely or perpendicularly to each other, in particular, connected perpendicularly in FIG. 1. The premixing pipeline 3 extends through the pipe wall 451 of the first pipe section 45 into the second pipe section 42. Accordingly, at least from the premixing position P4 to the injection position E1, the premixing pipeline 3 can be in the form of a straight pipe, which facilitates to form a stable annular flow and has a better atomization effect. Specifically, the above main pipe section 41 and narrow pipe section 42, etc., can all be part of the second pipe section 46.

As mentioned earlier, the premixed stream s1 is injected into the atomization pipeline 4 at the injection position E1. Referring to FIG. 1, the atomization apparatus 1 can also include a safety unit 6. The safety unit 6 is arranged at a position downstream of the injection position E1 in the atomization pipeline 4. The safety unit 6 can include a controller 61, an acquiring element 62, and a liquid outlet 63. The controller 61 can control the opening and closing of the liquid outlet 63 by determining the liquid content acquired by the acquiring element 62. Through some configuration, the liquid can be automatically removed when it exists, as shown by arrow s9, to avoid the impact of liquid on downstream components when it is not fully atomized (or even, in the air separation unit 10 mentioned later, not fully vaporised). To be understood, when it is mentioned that the acquiring element 62 acquires the liquid content, it is not required that the acquiring element 62 can directly detect the liquid content, but it can also indirectly acquire the amount of liquid content by directly detecting other parameters. The acquiring element 62 can be, for example, a temperature sensor, which can determine whether there exists some liquid content or even whether the liquid content exceeds a certain threshold based on the temperature, thereby controlling whether the liquid outlet 63 is opened, for example, by opening and closing a valve. In addition, in FIG. 1, the liquid outlet 63 is a liquid outlet pipe connected to the outside of the pipe wall of the atomization pipeline 4.

In FIG. 1, at the injection position E1 (i.e., the injection port) where the premixed stream s1 is injected into the atomization pipeline 4, the temperature of the entrainer gas g0 can be 5~40°C higher than that of the target liquid f0. In other words, the temperature difference between the entrainer gas g0 and the target liquid f0 can be 5~40°C. At the injection position E1, the velocity of the premixed stream s1 can be 30~60 m/s, while the velocity of the entrainer gas g0 can be 2.5~25 m/s. To be understood, since the velocities of the premixing gas g1 and the target liquid f0 in the premixed stream s1 may be different, for example, the velocity of the target liquid f0 is less than the velocity of the premixing gas g1, the "velocity of the premixed stream s1" refers to the average velocity of the premixed stream s1. As an example, the average velocity of the premixed stream s1 can be calculated by a weighted average of the respective velocities and corresponding mass flowrates of the premixing gas g1 and the target liquid f0. In other words, the product of the velocity and mass flowrate of the premixing gas g1 and the product of the velocity and mass flowrate of the target liquid f0 can be calculated, and then the sum of these two products is divided by the sum of the mass flowrates of the premixing gas g1 and the target liquid f0. Also to be understood, the control of the velocity can be achieved by arranging the pipeline through which it flows, such as pipe length, pipe diameter, pipe components, etc. For example, in FIG. 1, the premixing front section 35 of the premixing pipeline 3 before the premixing position P4 has its diameter reduced starting from position P5. In particular, the upstream pipe section 351 has its diameter abruptly reduced at position P5, which is an actual control means to reach the above velocity of the premixed stream s1. Incidentally, the reason why the diameter is abruptly reduced only where close to the premixing position P4 and a large diameter is employed before that, is that a large diameter employed can reduce the pressure drop. At the premixing position P4, the ratio of the mass flowrate of the premixing gas g1 to the target liquid f0 can be 3:1 ~5:1.

To be understood, when describing "at the premixing position P4", "at the injection position E1", etc., since the two streams involved actually collide and mix at the interface, the flow at the interface is extremely complex, and the various parameters are difficult to distinguish. Therefore, when describing the parameters, the parameters of the corresponding stream at a specific distance before reaching the interface, for example, 1 mm or 10 mm, can be used. For example, when it is described that "at the injection position E1, the velocity of the premixed stream s1 can be 30~60 m/s, while the velocity of the entrainer gas g0 can be 2.5~25 m/s", it can be regarded that the velocity of the premixed stream s1 at 10 mm before reaching the injection port of the injection section 331 is 30~60 m/s, while the velocity of the entrainer gas g0 at 10 mm before reaching the injection port is 2.5~25 m/s.

FIG. 2 shows another embodiment according to this disclosure. In FIG. 2, the same or similar reference numerals as in FIG. 1 denote the same or similar elements to avoid redundant description. Wherein, similar reference numerals refer to those with the same base number but with an added letter suffix. The main difference from FIG. 1 is that in the atomization apparatus 1n of FIG. 2, the atomization pipeline 4n does not have two pipe sections connected at an angle to each other, but is in the form of a straight pipe. At this time, the internal extension section 33n of the premixing pipeline 3n extending into the atomization pipeline 4n is in the form of a bent pipe, instead of the internal extension section 33 being in the form of a straight pipe as shown in FIG. 1. The internal extension section 33n includes a protruding section 332 protruding perpendicularly from the pipe wall 441 of the atomization pipeline 4n, also includes a transition bent section 333, and finally an injection section 331 coaxial with the atomization pipeline 4n. In addition, in FIG. 2, the injection position E1 (injection port) does not extend into the straight section 421 of the narrow pipe section 42, but is essentially at the front end of the straight section 421. FIG. 2 also shows an external connection section 37n.

This disclosure provides an atomization method for atomizing a target liquid f0 in an entrainer gas g0.

As seen from FIG. 1, first, the target liquid f0 can be caused to start mixing with the premixing gas g1 at the premixing position P4 to form a premixed stream s1 containing the target liquid f0 and the premixing gas g1. Wherein, at the premixing position P4, the flow direction Df of the target liquid f0 can form a predetermined angle α with the flow direction D1 of the premixing gas g1.

Then, the premixed stream s1 is injected into the entrainer gas g0, such that the target liquid f0 is atomized in the entrainer gas g0, forming a mixed stream s2.

As mentioned earlier, before sending the target liquid f0 into the entrainer gas g0 for atomization, premixing it with the premixing gas g1 can improve the atomization effect.

As shown in FIG. 1, the premixing gas g1 and the entrainer gas g0 can be made to be the same type of gas. This will not introduce other components.

As shown in FIG. 1, the atomization pipeline 4 can be made to have a narrow pipe section 42 with a reduced diameter. Further, the injection position E1 where the premixed stream s1 injects into the atomization pipeline 4 can be made to extend into the narrow pipe section 42.

To be understood, the various descriptions of the atomization apparatus 1 above, such as parameter descriptions, can all be applied to the atomization method. They will not be repeated here.

The above atomization apparatus and method fully atomize the target liquid in the entrainer gas by using a liquid-gas mixture and a high-speed flow mode. Compared with using a nozzle structure to assist atomization, the above atomization apparatus and method will not have the problem of the nozzle being blocked by dust or other impurities.

### Air Separation Unit

FIG. 3 shows an exemplary configuration of an air separation unit 10 according to this disclosure. The air separation unit 10 includes a distillation column system 20 and a main heat exchanger 40. The distillation column system 20 has a condenser-vaporiser 30.

In the embodiment shown in FIG. 3, the air separation unit 10 can include an atomization apparatus 1. The liquid conveying pipeline 2 of the atomization apparatus 1 is a purge pipeline 21 leading from the condenser-vaporiser 30. The target liquid f0 of the atomization apparatus 1 is the liquid purge discharged from the condenser-vaporiser 30 via the purge pipeline 21 (directly referred to as liquid purge f0 herein). The mixed stream s2 of the atomization apparatus 1 is passed into the main heat exchanger 40 to be heated, in FIG. 3, fully heated.

In the above air separation unit 10, the mixed stream s2, along with the liquid purge f0 contained therein (at this time, essentially evaporated into a gaseous state), exchanges heat in the main heat exchanger 40, supplying cold, thus the cold of the liquid purge f0 can be recovered. Moreover, due to the atomization effect, the liquid purge f0, along with the impurities therein, is substantially distributed dispersedly in the mixed stream s2, so it is easy to be fully evaporated along with the impurities therein, which prevents the accumulation of impurities in the channels of the main heat exchanger 40 and causing accidents.

In FIG. 3, the condenser-vaporiser 30 is also called as the main condenser-vaporiser. The liquid purge f0 can be an oxygen-rich liquid, and in actual engineering, it is even directly called as liquid oxygen, or LOX. The purge pipeline 21 for discharging the liquid purge f0 leads out from the bottom of the condenser-vaporiser 30.

Continuing to refer to FIG. 3, the premixing pipeline 3 and the atomization pipeline 4 of the atomization apparatus 1 can be formed by branching from an upstream pipeline 5 of an exhaust gas pipe 50 at a branch point P1. The exhaust gas pipe 50 discharges a gasflow g3 from the distillation column system 20. That is, the exhaust gas pipe 50 includes an upstream pipeline 5 and a downstream atomization pipeline 4, and also includes a premixing pipeline 3 that runs parallel to a section of the atomization pipeline 4 and then connects to the atomization pipeline 4.

Overall, in FIG. 3, the entrainer gas g0 from the branch point P1 of the exhaust gas pipe 50, after mixed with the premixed stream s1 at the injection position E1 to form a mixed stream s2, enters the main heat exchanger 40 to be fully heated. Specifically, in FIG. 3, after the target liquid f0 is injected into the entrainer gas g0, the downstream end of the atomization pipeline 4 goes to the cold end 401 of the main heat exchanger 40 and comes out from the hot end 402 of the main heat exchanger 40.

To be understood, the "pipeline", "pipe", "pipe section", etc. used herein all refer to the lines for the streams to flow in, and do not limit the physical form of the corresponding elements. Taking "pipeline" as an example, a pipeline can refer to a section of a complete pipe line. A pipeline can also be a combination of multiple pipe lines connected in sequence. The multiple pipelines can be connected by pipe joints or by other pipeline elements such as valves. The space for the streams to flow in the pipe joints or other pipeline elements can also be taken as part of the pipeline. For example, in FIG. 3, taking the flow direction D0 of the entrainer gas g0 as an example, the atomization pipeline 4 can substantially include the pipeline upstream of the main heat exchanger 40, can also include the pipeline downstream of the main heat exchanger 40, and can even include the space in the main heat exchanger 40 for the mixed stream s2 (including the entrainer gas g0, the premixing gas g1, and the liquid purge f0 that has been atomized and vaporised at this time) to pass through.

Also to be understood, when describing that a certain stream sequentially enters a first element and a second element, or using a similar description, it only indicates the order in which the stream enters the first and second elements, and does not exclude the case where the stream also passes through a third element between the first and second elements, nor does it exclude the case where the stream also passes through a third element before the first element or after the second element. For example, when it is described that the entrainer gas g0 sequentially passes through the branch point P1 and the injection position E1 to enter the main heat exchanger 40 to be fully heated, it does not exclude the case where the gasflow g3 shown in FIG. 3 also passes through an expansion turbine 60 after passing through the branch point P1 and before passing through the injection position E1, nor does it exclude the case where the gasflow g3 shown in FIG. 3 has entered the main heat exchanger 40 to be partially heated (which can be called as preheated) before passing through the branch point P1, and the case where the gasflow g3 shown in FIG. 4 has entered a sub-cooler 70 to be fully heated before passing through the branch point P1.

In FIG. 3, the liquid purge f0 can be an oxygen-rich liquid with an oxygen content at 30% or above. The gasflow g3 can be waste gas or an oxygen product, that is, the exhaust gas pipe 50 is used to discharge waste gas or an oxygen product. Further, the liquid purge f0 can be an oxygen-rich liquid with an oxygen content of 45%~95%. The waste gas can be, for example, waste oxygen or waste nitrogen. In the embodiment shown in FIG. 3, the exhaust gas pipe 50 discharges waste oxygen (WO).

Considering the amount of the liquid purge f0 discharged in actual engineering, injecting the liquid purge f0 in the form of an oxygen-rich liquid into the oxygen product has little effect on the oxygen purity of the oxygen product, and can ensure the quality of the oxygen product. For waste gas, injecting liquid purge f0 into it has no negative impact.

Continuing to refer to FIG. 3, the air separation unit 10 can be arranged such that, before reaching the branch point P1 to be split into the entrainer gas g0 and the premixing gas g1, the gasflow g3 in the exhaust gas pipe 50 enters the main heat exchanger 40 to be preheated, partially heated, in FIG. 3. That is, in FIG. 3, after coming out of the condenser-vaporiser 30, the exhaust gas pipe 50 first goes into the cold end 401 of the main heat exchanger 40, then comes out from the intermediate position P9 of the main heat exchanger 40, and then branches at the branch point P1 to form the premixing pipeline 3 and the atomization pipeline 4. Overall, in FIG. 3, the gasflow g3 first enters the main heat exchanger 40 to be partially heated (preheated, or heated for the first time). After coming out and, for example, going through some process(es), the gasflow g3 re-enters the main heat exchanger 40 to be fully heated (heated for the second time). In FIG. 3, as part of the gasflow g3, the entrainer gas g0, after preheated by the main heat exchanger 40, changes from the equilibrium state just coming out of the distillation column system 20 to an overheated state, and thus has enough heat to vaporise the liquid purge f0. In particular, in FIG. 3, both the gasflow g3 (including the entrainer gas g0) and the liquid purge f0 come from the condenser-vaporiser 30. Therefore, before reaching the main heat exchanger 40, the gasflow g3 is actually in an equilibrium state and has the same temperature as the liquid purge f0. After preheated by the main heat exchanger 40, even after going through the expansion by the expansion turbine 60 described later, the entrainer gas g0 is in an overheated state relative to the equilibrium state, also known as an overheated gasflow, so liquid purge f0 can be injected into it to achieve evaporation. At this point, before entering the main heat exchanger 40 to be heated, the liquid purge f0 in the mixed stream s2 has been vaporised, so it is easy to supply cold in the main heat exchanger 40 without causing safety hazards.

The amount of premixing gas g1 diverted from the gasflow g3 can be determined according to the size of the pipeline for injection, such as the size of the premixing pipeline 3 in FIG. 3. Incidentally, the size of the premixing pipeline 3 is actually limited by the available pressure drop. In the embodiment of FIG. 3, the premixing gas g1 can account for only a small part of the gasflow g3.

To be understood, when using herein "heated for the first time", "heated for the second time", etc. it only means to characterize the sequence of the corresponding steps, in order to describe the entire method more clearly. This expression does not limit the corresponding stream to only going through the corresponding number of heating steps. For example, other heating means or heating treatments may be further provided between the two heating steps described herein. However, to be understood, the process of the heating treatments shown in the illustrated embodiments is preferred.

Continuing to refer to FIG. 3, the air separation unit 10 can also include an expansion turbine 60. The expansion turbine 60 can be arranged in the pipe section of the atomization pipeline 4 located between the branch point P1 and the injection position E1. That is, the entrainer gas g0 from the branch point P1, after expanded by the expansion turbine 60, reaches the injection position E1 and receives the premixed stream s1 (liquid purge f0).

Accordingly, the premixed stream s1 containing the liquid purge f0 is injected into the atomization pipeline 4 at a position downstream of the expansion turbine 60. A comparative example is provided here, in which the liquid purge is injected upstream of the expansion turbine 60. In this comparative example, liquid droplets may be carried to the impeller of the downstream expansion turbine, which poses an operational risk. Moreover, injecting the liquid purge before the expansion turbine will lower the operating temperature of the expansion turbine and reduce its load. Compared with this comparative example, injecting the liquid purge f0 downstream of the expansion turbine 60 (in FIG. 3, the premixed stream s1 containing the liquid purge f0) can avoid accidents and increase the load of the expansion turbine 60. To be especially noted, in the embodiment shown in FIG. 3, because the means of injection after premixing is adopted, the liquid purge f0 is fully atomized in the entrainer gas g0, and the small droplets of the liquid purge f0 are very uniformly distributed in the atomization pipeline 4. Therefore, even if the temperature of the entrainer gas g0 in the atomization pipeline 4 is slightly higher than the temperature that can cause the various components in the liquid purge f0 to vaporise, the liquid purge f0 can be fully vaporised. This improves the operability of injecting the liquid purge f0 downstream of the expansion turbine 60. In other words, the premixing treatment makes it possible to inject the liquid purge f0 at a position downstream of the expansion turbine 60, with a lower temperature compared to upstream of the expansion turbine 60, so that the various benefits mentioned earlier can be obtained while it's still easy to achieve a full evaporation.

The exemplary air separation unit 10 actually shown in FIG. 3 is a nitrogen generator (TCN) for producing nitrogen. The general process within the air separation unit 10 is briefly described here for ease of understanding. However, to be understood, the air separation unit 10 can also employ other configurations.

Referring to FIG. 3, the air separation unit 10 employs a single-column structure with a distillation column 81. A feed stream s0 in the form of air is cooled in the main heat exchanger 40 and fed to a lower position of the distillation column 81 through a feed pipeline 71.

To be understood, as mentioned earlier, when describing various components or processes, it only indicates that the stream passes through or sequentially passes through the above various components or treatments, and does not exclude that passing through other components or treatments before, after, or between them. For example, before fed to the distillation column 81, the feed stream s0 can be dried, purified, etc. by specific processes or devices, for example, through absorbers, filters, additional heat exchangers, etc.

Through the distillation in the distillation column 81, nitrogen gas s7 that can be extracted is formed at the top of the distillation column 81. The nitrogen gas s7 can be sent to the main heat exchanger 40 to be fully heated and then discharged as a nitrogen gas product. A nitrogen-rich gasflow s5 that enters the condenser-vaporiser 30 is also formed at the top of the distillation column 81. After the nitrogen-rich gasflow s5 enters the condenser-vaporiser 30 to be condensed, a nitrogen-rich liquid flow s4 is formed, which flows back to a higher position in the distillation column 81. At least a part of the nitrogen-rich liquid flow s4 can be extracted as a liquid nitrogen product s8.

Through the distillation in the distillation column 81, an oxygen-rich liquid flow s6 is formed at the bottom of the distillation column 81. The oxygen-rich liquid flow s6 is sent to the condenser-vaporiser 30. Through heat exchange with the nitrogen-rich gasflow s5, the oxygen-rich liquid flow s6 forms a waste oxygen gasflow (i.e., gasflow g3, which is later branched into the above entrainer gas g0 and premixing gas g1, thus hereinafter referred to as waste oxygen gasflow g3). The waste oxygen gasflow g3 is directly discharged through the exhaust gas pipe 50, for example, it can be directly discharged to the atmosphere, or it can be sent to a device for purifying the feed stream s0 to further function. A liquid purge f0 discharged through the purge pipeline 21 is formed at the bottom of the condenser-vaporiser 30.

An example of the atomization apparatus 1 used in the air separation unit 10 is given below in conjunction with FIG. 1 and FIG. 3. In the embodiment illustrated by FIG. 3, the temperature of the liquid purge f0 can be between -175°C and -185°C. The mass flowrate of the premixing gas g1 in the premixing pipeline 3 formed by branching from the upstream pipeline 5 can account for 1~5% of the gasflow g3 in the upstream pipeline 5. Correspondingly, the ratio of the mass flowrate of the premixing gas g1 to the entrainer gas g0 is approximately 1:100 ~1:20. The absolute pressure of the entrainer gas g0 can be 1 atm ~6 bara.

FIG. 4 shows an air separation unit 10a according to another embodiment. In FIG. 4 and the subsequent FIG. 5, the same or similar reference numerals as in FIG. 3 denote the same or similar elements to avoid redundant description. Particularly, in the embodiment shown in FIG. 4, the distillation column system of the air separation unit 10a and many other pipelines involved are not shown. To be understood, the air separation unit 10a in FIG. 4 and the air separation unit 10 in FIG. 3 can employ completely different configuration in terms of the distillation column system. For example, the air separation unit 10a can be used to produce oxygen, or to produce both oxygen and nitrogen. The distillation column system can be a double-column or triple-column configuration, for example, it can also be a single-column configuration with a top re-boiler.

In FIG. 4, the air separation unit 10a also includes a sub-cooler 70. The main difference between the embodiment in FIG. 4 and the embodiment in FIG. 3 is that in FIG. 4, the air separation unit 10a can be arranged such that, before reaching the branch point P1 to be split into the entrainer gas g0 and the premixing gas g1, the gasflow g3 in the exhaust gas pipe 50 enters the sub-cooler 70 to be preheated. That is, after leading out from the distillation column system (not illustrated), the exhaust gas pipe 50 goes into the sub-cooler 70 for preheating, and then branches at the branch point P1 to form the premixing pipeline 3 and the atomization pipeline 4.

Similarly to FIG. 3, the sub-cooler 70 can also cause the gasflow g3 in the exhaust gas pipe 50 (especially the entrainer gas g0 therein) to change from an equilibrium state to an overheated state, so when the liquid purge f0 is subsequently injected, the liquid purge f0 can be fully vaporised.

FIG. 4 also shows a process stream s3 that is cooled in the sub-cooler 70 to exchange heat with the entrainer gas g0. The process stream s3 can, for example, come from the distillation column system or the feed system of the air separation unit 10a.

### Air Separation Unit according to a Variation Example

FIG. 5 shows an air separation unit 10b according to a variation example. The main difference between the variation example of FIG. 5 and the embodiment of FIG. 3 is that in FIG. 5, the air separation unit 10b does not adopt the above atomization apparatus 1. More precisely, the liquid purge f0 is directly injected into the atomization pipeline 4 without premixing.

Overall, the air separation unit 10b includes a main heat exchanger 40 and an expansion turbine 60. The air separation unit 10b is arranged such that the gasflow g3 in the exhaust gas pipe 50b, after passing through the expansion turbine 60, enters the main heat exchanger 40 to be heated, to be fully heated. That is, after passing through the expansion turbine 60, the exhaust gas pipe 50b enters the cold end 401 of the main heat exchanger 40 and comes out from the hot end 402 of the main heat exchanger 40.

The liquid purge f0 discharged from the condenser-vaporiser (not illustrated) via the purge pipeline 21b is injected into the exhaust gas pipe 50b at an injection position E1 between the expansion turbine 60 and (the cold end 401 of) the main heat exchanger 40.

As mentioned earlier, it is advantageous to inject the liquid purge f0 downstream of the expansion turbine 60. In particular, for comparison with FIG. 1 or FIG. 3, the exhaust gas pipe 50b can be substantially regarded to include an upstream pipeline 5b generally located upstream of the expansion turbine 60 and an atomization pipeline 4b generally located downstream of the expansion turbine 60, similarly to FIG. 1. The description for the specific configuration of the atomization pipeline 4 in FIG. 1 or FIG. 3 can be applied to the atomization pipeline 4b of the exhaust gas pipe 50b in FIG. 5, located downstream of the expansion turbine 60. For example, the corresponding position of the atomization pipeline 4b in FIG. 5 near the injection position E1 can also have a throat configuration to facilitate droplet dispersion, increase the gas-liquid contact area, and accelerate evaporation.

To be understood, unless the contrary is clearly indicated, each aspect or embodiment defined herein can be combined with any one or more other aspects or embodiments. In particular, any feature indicated as preferred or advantageous can be combined with any other feature indicated as preferred or advantageous.

The embodiments described in this specification are only preferred specific ones of this disclosure. The above embodiments are only used to illustrate the technical solution of this disclosure and not to limit this disclosure. Any technical solution that the skilled in the art can obtain through logical analysis, reasoning, or limited experiments based on the concept of this disclosure should fall within the scope of this disclosure.

## Claims

1. An atomization apparatus for atomizing a target liquid in an entrainer gas, **characterized in that**, the atomization apparatus comprises:
a liquid conveying pipeline, which the target liquid flows in;
a premixing pipeline, which a premixing gas flows in, wherein the target liquid goes into the premixing pipeline at a premixing position via the liquid conveying pipeline, so that the target liquid mixes with the premixing gas, forming a premixed stream containing the target liquid and the premixing gas, wherein the liquid conveying pipeline and the premixing pipeline are arranged such that, at the premixing position, the flow direction of the target liquid is at a predetermined angle to the flow direction of the premixing gas; and
an atomization pipeline, which the entrainer gas flows in, wherein the premixed stream is injected into the atomization pipeline via the premixing pipeline, so that the target liquid atomizes in the entrainer gas, forming a mixed stream.

2. The atomization apparatus according to claim 1, **characterized in that**, the atomization apparatus is arranged such that the premixing gas and the entrainer gas are the same type of gas.

3. The atomization apparatus according to claim 1, **characterized in that**, the premixing pipeline and the atomization pipeline are formed by branching from an upstream pipeline at a branch point.

4. The atomization apparatus according to claim 1, **characterized in that**, the atomization pipeline has a narrow pipe section with a reduced diameter;
the narrow pipe section has a start position and an end position in the flow direction of the entrainer gas;
the injection position where the premixed stream enters the atomization pipeline is upstream of the end position, preferably between the start position and the end position.

5. The atomization apparatus according to claim 4, **characterized in that**,
the atomization pipeline comprises two main pipe sections connected to both sides of the narrow pipe section;
the narrow pipe section comprises a straight section and two transition sections, the diameter of the straight section is a constant value smaller than the diameters of the two main pipe sections, and the diameters of the two transition sections gradually change from the side of the corresponding main pipe section towards the side of the straight section, respectively;
the injection position is located within the straight section.

6. The atomization apparatus according to claim 1, **characterized in that**, the atomization pipeline has a first pipe section and a second pipe section connected at an angle to each other;
the premixing pipeline extends through the pipe wall of the first pipe section into the second pipe section.

7. The atomization apparatus according to claim 1, **characterized in that**, the premixing pipeline has an injection section extending into the atomization pipeline, the injection section comprising an injection port for the premixed stream to be injected;
the injection section is coaxially arranged within a corresponding pipe section of the atomization pipeline, such that at the injection port, the flow direction of the premixed stream is consistent with the flow direction of the entrainer gas.

8. The atomization apparatus according to claim 1, **characterized in that**, the premixed stream is injected into the atomization pipeline at an injection position; the atomization apparatus further comprises a safety unit, which is arranged downstream of the injection position in the atomization pipeline, the safety unit comprising a controller, an acquiring element, and a liquid outlet, wherein the controller controls opening and closing of the liquid outlet by determining a liquid content acquired by the acquiring element.

9. The atomization apparatus according to claim 1, **characterized in that**, the atomization apparatus is arranged such that:
the predetermined angle is between 30° and 90°;
at an injection position where the premixed stream enters the atomization pipeline, the temperature of the entrainer gas is 5~40°C higher than the temperature of the target liquid;
at the injection position, the velocity of the premixed stream is 30~60 m/s, and the velocity of the entrainer gas is 2.5~25 m/s; and/or
at the premixing position, the ratio of the mass flowrate of the premixing gas to the target liquid is 3:1 ~5:1.

10. An atomization method for atomizing a target liquid in an entrainer gas, **characterized in that**, the atomization method comprises:
causing the target liquid to start mixing with a premixing gas at a premixing position to form a premixed stream containing the target liquid and the premixing gas, wherein at the premixing position, the flow direction of the target liquid is at a predetermined angle to the flow direction of the premixing gas; and
injecting then the premixed stream into the entrainer gas, so that the target liquid atomizes in the entrainer gas to form a mixed stream.

11. The atomization method according to claim 10, **characterized in that**, the premixing gas and the entrainer gas are made to be the same type of gas.

12. The atomization method according to claim 10, **characterized in that**, the atomization pipeline is made to have a narrow pipe section with a reduced diameter;
an injection position where the premixed stream enters the atomization pipeline is made to be within the narrow pipe section.

13. The atomization method according to claim 10, **characterized in that**, it is designed such that:
the predetermined angle is 30~90°;
at an injection position where the premixed stream enters the atomization pipeline, the temperature of the entrainer gas is 5~40°C higher than the temperature of the target liquid;
at the injection position, the velocity of the premixed stream is 30~60 m/s, and the velocity of the entrainer gas is 2.5~25 m/s; and/or
at the premixing position, the ratio of the mass flowrate of the premixing gas to the target liquid is 3:1 ~5:1.

14. An air separation unit, comprising a distillation column system and a main heat exchanger, the distillation column system having a condenser-vaporiser, **characterized in that**,
the air separation unit comprises the atomization apparatus according to claim 1, wherein a liquid conveying pipeline of the atomization apparatus is a purge pipeline leading from the condenser-vaporiser, a target liquid of the atomization apparatus is a liquid purge discharged from the condenser-vaporiser via the purge pipeline, and a mixed stream of the atomization apparatus flows into the main heat exchanger to be heated.

15. The air separation unit according to claim 14, **characterized in that**, a premixing pipeline and an atomization pipeline of the atomization apparatus are formed by branching from an upstream pipeline of an exhaust gas pipe at a branch point, the exhaust gas pipe discharging a gasflow from the distillation column system.

16. The air separation unit according to claim 14, **characterized in that**, the liquid purge is an oxygen-rich liquid with an oxygen content at 30% or above, and the gasflow is waste gas or an oxygen product.

17. The air separation unit according to claim 15, **characterized in that**, the air separation unit is arranged such that, before reaching the branch point to be split into the entrainer gas and the premixing gas, the gasflow in the exhaust gas pipe enters the main heat exchanger to be preheated.

18. The air separation unit according to claim 15, **characterized in that**, the premixed stream of the atomization apparatus is injected into an atomization pipeline at an injection position;
the air separation unit further comprises an expansion turbine, which is arranged in a pipe section of the atomization pipeline located between the branch point and the injection position.

19. The air separation unit according to claim 15, **characterized in that**, the air separation unit further comprises a sub-cooler;
the air separation unit is arranged such that, before reaching the branch point to be split into the entrainer gas and the premixing gas, the gasflow in the exhaust gas pipe enters the sub-cooler to be preheated.
